# DEMANDE DE BREVET EUROPEEN

(11) **EP 1 992 868 A1**
(43) Date de publication de la demande: **19.11.2008**
(21) Numéro de dépôt: 08156220.9
(22) Date de dépôt: 15.05.2008
(51) Int. Cl.: F21S 8/10, F21V 5/00, G02B 6/00, B60Q 1/26

(54) **Dispositif d'éclairage pour véhicule automobile**

(30) Priorité: 15.05.2007 FR 0703149
(71) Demandeur: VALEO VISION, 93012 Bobigny (FR)
(72) Inventeur: De Lamerterie, Antoine, 75019 Paris (FR); Le Bars, Jean-François, 70567 Stuttgart (DE)

(57) **Abrégé**

L'invention concerne un dispositif d'éclairage et/ou de signalisation pour véhicule automobile, qui comporte :
- au moins une source lumineuse (S),
- une nappe de guidage (NG) des rayons lumineux qui comporte
- une zone de couplage (ZC) avec la source lumineuse, au sein de laquelle ou à proximité de laquelle est disposée ladite source lumineuse (S),
- une zone d'émission (ZE) de lumière comportant une face arrière munie d'au moins deux éléments prismatiques (EP) de forme substantiellement longiligne afin que des rayons se propageant dans la nappe et atteignant ces éléments prismatiques sortent de la nappe de guidage par la face avant, de façon à créer au moins deux surfaces éclairantes également d'une forme substantiellement longiligne correspondant auxdits éléments prismatiques.

## Description

L'invention concerne un dispositif d'éclairage ou de signalisation pour véhicule automobile qui comporte une nappe de guidage de la lumière. On comprend sous ce terme un guide de lumière qui n'est pas linéaire, mais qui se présente sous forme d'un écran, d'une plaque.

On connaît par exemple du brevet EP1 434 000 un écran muni sur l'une de ses faces de foyers de diffusion sous forme d'altérations superficielles et alimenté en lumière sur son chant par une pluralité de sources de lumière, de façon à ce que la lumière se propage dans l'écran, les rayons lumineux sortant de l'écran quand ils atteignent les foyers de diffusion. On obtient ainsi un écran qui, s'il est muni de foyers de diffusions de petite taille réparties de façon homogène sur toute sa surface, éclaire sur toute sa surface avec une luminosité douce et modulable. Mais il n'y a pas de contrôle fin de la direction privilégiée d'émission de la lumière, ni de sa répartition, de sa photométrie.

On connaît par ailleurs les guides de lumière linéaires, comme ceux décrits dans le brevet EP 1 605 201, qui sont de section approximativement cylindriques, avec une face arrière munie de prismes et une face avant d'émission et une source de lumière à une extrémité au moins : les rayons se propagent dans le guide par réflexion totale, et sortent du guide quand ils rencontrent un prisme, donnant ainsi une surface éclairante suivant le contour du guide. Ce type de guide linéaire n'offre la possibilité d'avoir qu'une seule surface éclairante : si on en veut plusieurs, il est nécessaire de disposer les guides les uns à côté des autres ou les uns au dessus des autres. D'autre part, de tels guides linéaires ne permettent pas d'émettre des faisceaux d'intensité lumineuse élevée, notamment suffisante pour remplir certaines fonctions en regard des réglementations en vigueur.

L'invention a alors pour objet un nouveau type de guide de lumière qui puisse remédier aux inconvénients précités, et qui puisse, notamment, fournir plusieurs faisceaux et/ou surfaces éclairantes avec un même dispositif du type guide de lumière. Subsidiairement, l'invention cherche à ce que ces faisceaux puissent avoir une direction, une photométrie, une répartition contrôlée, avec des surfaces éclairantes associées de forme contrôlée et ajustable, par exemple sous forme de « lignes ».

L'invention a tout d'abord pour objet un dispositif d'éclairage et/ou de signalisation pour véhicule automobile, qui comporte :
- au moins une source lumineuse,
- une nappe de guidage des rayons lumineux qui comporte
   - une zone de couplage avec la source lumineuse, au sein de laquelle ou à proximité de laquelle est disposée ladite source lumineuse
   - une zone d'émission de lumière comportant une face arrière munie d'au moins deux éléments prismatiques de forme substantiellement longiligne afin que des rayons se propageant dans la nappe et atteignant ces éléments prismatiques sortent de la nappe de guidage par la face avant de façon à créer au moins deux surfaces éclairantes également d'une forme substantiellement longiligne correspondant auxdits éléments prismatiques.

On utilise ainsi un guide de lumière qui n'est plus linéaire mais surfacique. En choisissant le nombre, la répartition, la forme même des éléments prismatiques sur la face arrière, on peut contrôler très précisément la forme et la distribution des faisceaux correspondants, et notamment obtenir une pluralité de surfaces éclairantes (autant que d'éléments prismatiques) qui puissent être sous forme de lignes, par exemples les unes au dessus des autres. On peut ainsi obtenir un style très original en ayant recours qu'à un seul dispositif , les « lignes » de lumière générées étant bien contrôlées et pouvant, notamment, être particulièrement brillantes.

Les sources lumineuses peuvent être de type halogènes, ou être de type diode électroluminescente (ou LED selon son abréviation anglaise).

Selon une variante, la ou les sources lumineuses utilisées sont des LEDs qui émettent radialement, du type de celles qu'on désigne par le terme anglais « Side Emitter ». Dans ce cas, leur surface émissive se trouve dans ou à proximité immédiate d'une ouverture (de préférence traversante) pratiquée de façon appropriée dans la zone de couplage correspondante : la lumière émis se trouve directement injectée dans l'épaisseur de la zone de couplage.

Selon une autre variante, on peut utiliser une ou plusieurs LEDs plus classiques, émettant dans un demi-plan. Et dans ce cas, il peut être prévu un ou des éléments optiques déviateurs, faisant ou non partie intégrante de la zone de couplage, qui viennent rediriger dans l'épaisseur de la zone de couplage la lumière émise par la ou les LEDs.

On peut aussi prévoir que les sources de lumière ne soient pas à proximité immédiate de la zone de couplage, et que des moyens optiques (guides de lumière, fibres optiques) amènent la lumière de la source à IIa zone de couplage.

Selon un mode de réalisation, au moins un des éléments prismatiques est sous forme d'une encoche courant sur la majorité de la largeur de la nappe. Cette encoche va pouvoir générer une surface éclairante de même forme, linéaire, rectiligne, courbe, ondulée ....

Selon un mode de réalisation, tous les éléments prismatiques sont de même forme, notamment sous forme d'encoches parallèles entre elles, de forme identique ou non. On peut alors obtenir des surfaces éclairantes parallèles entre eux, chaque faisceau issu de ces surfaces éclairantes pouvant par exemple remplir une fonction différente.

Il est aussi possible qu'au moins un des éléments prismatiques soit sous forme d'une encoche discontinue. On peut alors obtenir des surfaces éclairantes sous forme de « pointillés » au style particulier.

Outre ces éléments prismatiques, on peut prévoir d'autres moyens optiques dans la nappe afin de mieux contrôler la distribution des faisceaux lumineux générés, d'étaler davantage le faisceau par exemple, ou de dévier angulairement sa direction privilégiée d'émission (qu'on peut appeler aussi de façon plus concise son axe optique). Ces moyens optiques peuvent notamment être des stries et/ ou tores et/ou prismes, qui sont déposés sur l'une au moins des faces d'au moins un des éléments prismatiques.

Alternativement ou cumulativement à ceci, on peut prévoir aussi que des stries et/ou tores et/ou prismes soient présents sur la face avant de la nappe de guidage, en regard d'au moins un des éléments prismatiques disposés sur sa face arrière.

La zone de couplage de la nappe est la zone où se trouve la source et où la lumière émise par la source est collectée pour être envoyée vers la zone d'émission. Avantageusement, cette zone de couplage de la nappe de guidage a un chant réfléchissant.

On peut rendre ce chant apte à réfléchir la lumière de différentes façons, notamment par dépôt d'un revêtement réfléchissant du type aluminium.

Une autre possibilité est d'utiliser le principe de la réflexion totale, en fonction de l'angle d'arrivée du rayon par rapport au chant

Une autre possibilité est de provoquer une réflexion totale, modifiant la géométrie du chant, notamment en lui donnant une forme en coin par double biseautage.

Ces différentes possibilités sont alternatives ou cumulatives : sur le contour de la zone de couplage, on peut ainsi avoir un phénomène de réflexion totale « naturelle » sur les bords, et une réflexion « provoquée » par aluminage (réflexion classique) ou modification de la forme du chant sur le reste du contour (réflexion totale).

La nappe de guidage peut être disposée selon un plan sensiblement vertical ou oblique dans un projecteur ou dans un feu de véhicule. Les glaces extérieures des projecteurs et feux présentent généralement un galbe, et même le plus souvent un double galbe verticalement et horizontalement. La nappe, pour des raisons de style, peut donc se trouver derrière la glace extérieure en épousant son galbe. La nappe peut donc comporter des portions planes et des portions galbées.

La nappe de guidage peut être sous forme d'un écran intermédiaire dans le feu ou le projecteur automobile. Elle peut aussi, moyennant quelques aménagements, être ou faire partie de la glace extérieure, de fermeture, du feu ou du projecteur. Dans ce dernier cas, il est souhaitable que la zone de couplage soit dissimulée, une fois le dispositif monté dans le véhicule. On peut aussi prévoir une excroissance périphérique servant de pied de glace afin de pouvoir à la fois camoufler la zone de couplage et fixer la glace au boîtier du feu ou du projecteur.

On a donc des configurations où la zone d'émission de lumière de la nappe de guidage contient au moins une portion plane. La nappe peut d'ailleurs, dans son mode de réalisation le plus simple, être entièrement plane. Dans ce cas, avantageusement, la zone de couplage correspondante de la nappe de guidage a un contour substantiellement parabolique.

Selon d'autres modes de réalisation, la zone d'émission de lumière de la nappe de guidage contient au moins une portion galbée, notamment suivant une portion de forme substantiellement cylindrique ou conique. Dans ce cas, avantageusement, la zone de couplage correspondante de la nappe de guidage a une forme suivant substantiellement le galbe de la zone d'émission. Dans les zones courbes, la zone de couplage peut avoir un contour qui n'est plus tout à fait parabolique.

Avantageusement, l'ensemble, ou tout au moins la majorité, des rayons lumineux « arrivant » sur les éléments prismatiques de forme longiligne sont confinés dans des plans perpendiculaires à la nappe et auxdits éléments en ligne : si on projettait les rayons sur un plan qui est perpendiculaire aux « lignes » d'éléments prismatiques, la trace des rayons donnerait des lignes ordonnées, toutes parallèles entre elles. Ce confinement est obtenu, notamment, par le mode de couplage choisi, tout particulièrement par le contour parabolique ou proche d'une parabole évoqué plus haut.

On a vu précédemment que l'on peut, outre les éléments prismatiques, munir la nappe de guidage d'éléments optiques du type prismes, tores. Avantageusement, on les dispose de façon à ce que tous les rayons lumineux sortent de la face avant de la nappe de guidage selon un axe optique donné. Ceci est d'autant plus utile quand la nappe de guidage présente, au moins localement, un fort galbe, et qu'il est néanmoins nécessaire que la direction principale d'émission de la lumière reste inchangée au niveau de l'ensemble de la nappe (direction par exemple constamment parallèle à l'axe longitudinal X du véhicule). Les prismes et/ou tores permettent donc, si besoin il y a, de « redresser » localement les rayons sortant de la nappe.

De préférence, dans la ou les portions de zones d'émission plane(s) de la nappe de guidage, les rayons sortant de la zone de couplage se propagent selon des plans médians sensiblement perpendiculaires au plan de la nappe de guidage dans la zone d'émission.

Et dans la ou les portions de zones d'émission ayant un galbe sensiblement cylindrique, les rayons sortant de la zone de couplage se propagent de préférence selon des plans médians qui sont sensiblement perpendiculaires au cylindre et qui contient l'axe du cylindre.

Dans le cas où dans la ou les portions de zones d'émission ayant un galbe sensiblement conique, les rayons sortant de la zone de couplage se propagent de préférence selon des plan médians qui sont sensiblement perpendiculaires au cône et qui contient le sommet du cône (et qui passent par l'axe du cône donc).

Dans le cas d'une nappe de guidage plane, l'ensemble des rayons se propagent en outre dans des plans tous parallèles entre eux. Ce mode de fonctionnement permet que l'ensemble des zones ce couplage soit alimenté en lumière de la façon aussi homogène que possible, pour qu'elles mêmes alimentent en lumière les éléments prismatiques des zones émissives de façon aussi homogène que possible : on obtient ainsi des surfaces éclairantes elles même très homogènes d'aspect.

On peut « découper » la nappe de guidage en portions planes, portions de cylindre et/ou portions de cônes adjacentes.

La nappe de guidage peut ainsi comprendre au moins une portion de zone d'émission plane et au moins une portion de zone d'émission galbée, avec de préférence une source lumineuse par portion de zone.

Elle peut comprendre aussi au moins deux portions de zones d'émission adjacentes de galbes différents, avec soit une source lumineuse par zone, soit une source commune aux deux portions de zones.

Selon une variante, la face avant ou la face arrière de la nappe de guidage est en outre unie de foyers de diffusion et/ou de réflexion par altération superficielle de la dite face. De cette façon, on peut avoir à la fois l'émission de faisceaux relativement brillants par la présence des éléments prismatiques associés aux sources lumineuses ad hoc, et l'émission d'un halo/d'une ambiance lumineuse plus douce grâce à ces foyers de diffusion (avec les mêmes sources lumineuses ou non). On peut varier très avantageusement les effets de style en modulant la répartition de ces foyers de diffusion.

Les faisceaux émis grâce aux éléments prismatiques sont par exemple des faisceaux de type feux de position, feux stop, indicateurs de direction, feux anti-brouillard, feu diurne (désigné en anglais par le terme Daytime Running Light, ou encore DRL).

La nappe peut émettre plusieurs faisceaux, chacun ayant sa fonction propre : on regroupe plusieurs fonctions de signalisation, par exemple, avec la même nappe de guidage. Pour ce faire, différents modes de réalisation sont possibles : on peut, comme vu plus haut, partager la nappe en une succession de portions de zones de couplage associées à des portions de zone émissive, avec des sources lumineuses dédiées pour chaque portion de zone de couplage, et on peut choisir des sources différentes (nombre, couleur, intensité, répartition de lumière ....) d'une zone à l'autre selon la fonction visée. Une autre possibilité est de prévoir deux zones de couplages, « en face » l'une de l'autre et réunies par la zone émissive : chaque zone de couplage peut avoir sa source de lumière particulière, et on allume alternativement l'une ou l'autre des sources. On peut alors symétriser la nappe, avec deux zones de couplages symétriques ou sensiblement symétriques. Il est alors nécessaire de « symétriser », ou d'adapter en conséquence la géométrie des éléments prismatiques de la zone émissive, pour qu'ils puissent être efficaces optiquement, que la lumière vienne d'un côté ou de l'autre.

Le projecteur ou le feu de signalisation qui intègre la nappe de guidage selon l'invention peut prévoir de disposer au moins une autre source de lumière à l'arrière de la nappe de guidage, de façon à émettre un faisceau lumineux à travers celle-ci.

L'invention sera détaillée ci après à l'aide d'exemples de réalisation non limitatifs et illustrés par les figures suivantes :
- Figure 1 : une vue de la face arrière d'une nappe de guidage plane selon l'invention,
- Figure 2 : une vue de détail, en section, de la nappe de guidage de la figure 1,
- Figures 3 et 4: deux variantes de la figure 2,
- Figure 5a,5b : deux vues de la face arrière et de la face avant d'une nappe de guidage pour partie plane et pour partie galbée selon l'invention,
- Figure 6 : une vue de détail, en section, de la nappe de guidage selon la figure 5,
- Figures 7, 8, 9 : trois agrandissements de la zone de couplage de la nappe de guidage dans la zone où est disposée la source de lumière, avec pour chaque figure un type de source lumineuse différent.

Toutes ces figures sont très schématiques et ne respectent pas nécessairement l'échelle pour plus de clarté.

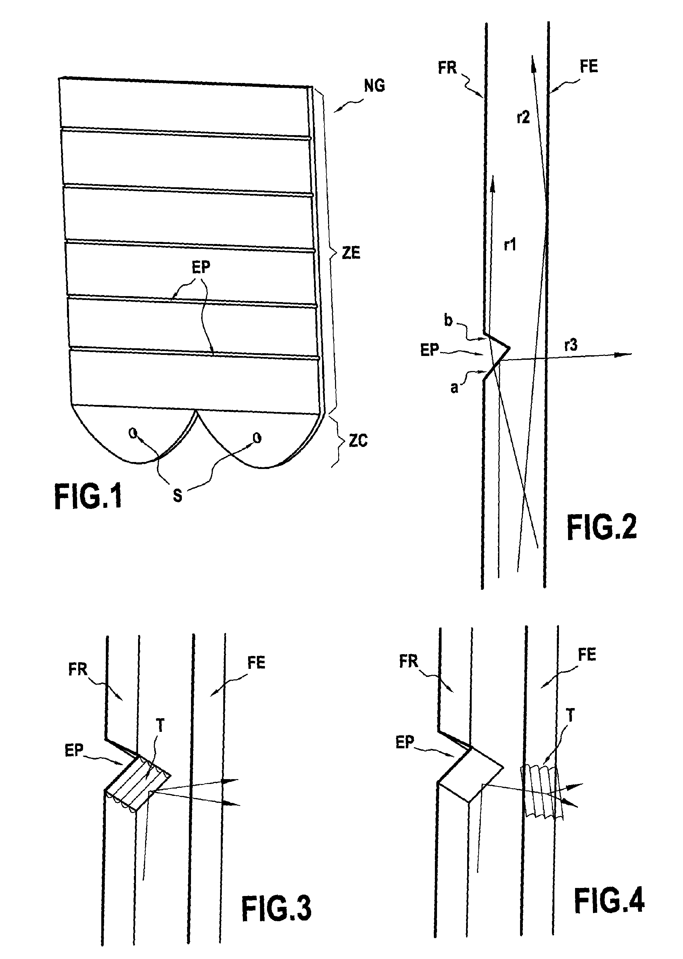

La figure 1 correspond donc à un premier exemple de réalisation de la nappe de guidage selon l'invention, à savoir une nappe de guidage NP substantiellement plane et transparente, disposée dans un plan substantiellement vertical avec ses deux parois parallèles entre elles, d'épaisseur constante égale à environ 1,5 à 4 mm, par exemple d'environ 3 mm. La nappe de guidage NP est en polycarbonate ou en PMMA (Poly métracrylate de méthyle).

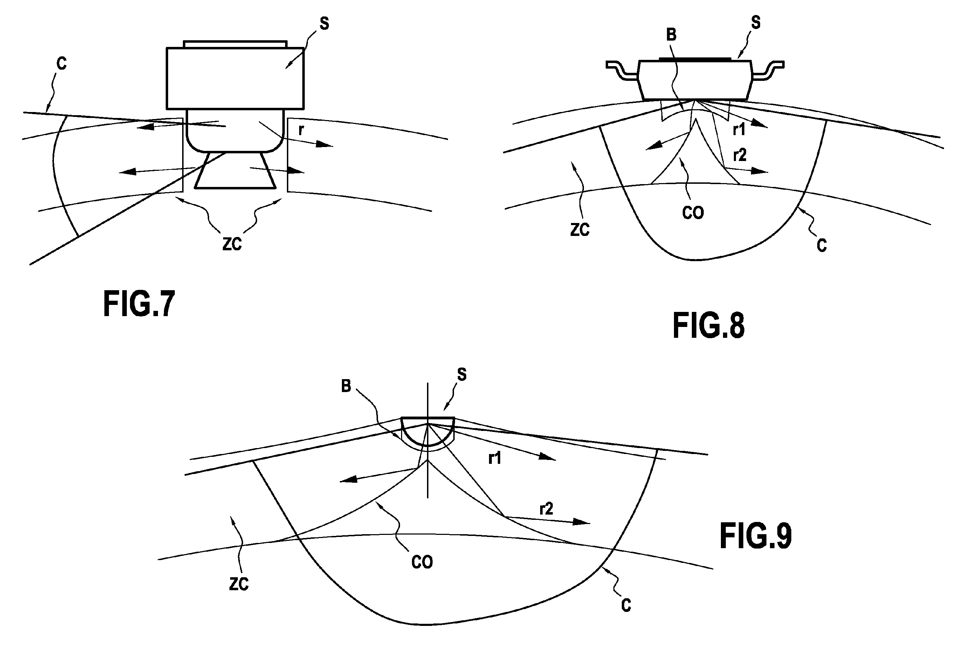

Dans la configuration représentée, la nappe se décompose en une partie basse qui est la zone de couplage ZC et une partie supérieure qui est la zone d'émission de lumière ZE. La zone de couplage ZC comprend ici trois zones de découpe en forme de portion de parabole. Dans chacune de ces zones est prévue une ouverture dans laquelle est disposée une source lumineuse S sous la forme d'une diode électroluminescente, appelée par la suite LED pour plus de concision (pour l'abréviation du terme anglais correspondent). Chacune des diodes est une diode émettant de la lumière radialement (appelée aussi « side emitter LED » en anglais). La disposition de la LEd sera détaillée plus loin à la figure 7. Le chant du bord en forme sensiblement parabolique des deux zones est rendu réfléchissant par un procédé d'aluminage. Au niveau des bords de la parabole, l'aluminage est optionnel : le chant reste réfléchissant selon le principe de la réflexion totale. Chaque LED émet sur 360 ° de la lumière dans la nappe, les rayons descendant étant renvoyés vers le haut par réflexion sur le chant métallisé de ces zones. L'essentiel des rayons des LEDs se propage donc vers la partie supérieure de la nappe, dite zone émissive de lumière ZE, par propagation directe ou avec une réflexion préalable.

La zone émissive ZE présente sur sa face arrière dite face de réflexion FR une série d'encoches rectilignes substantiellement horizontales, représentée avec plus de détails en figure 2. qui servent d'éléments prismatiques EP, et qui courent sur toute la largeur de la nappe. Il y aura autant d'encoches EP que l'on veut de surfaces éclairantes. Ici, on a 5 encoches, donc la nappe pourra émettre 5 surfaces éclairantes sous forme de lignes rectilignes parallèles entre elles. A noter que les éléments prismatiques peuvent ne pas être horizontales, ils peuvent être disposés de façon oblique notamment.

La figure 2 permet de mieux comprendre le fonctionnement de la nappe de guidage. Elle représente une section de la nappe selon la figure 1, au niveau de l'une des encoches EP. L'encoche présente une face active optiquement, la face a, et une face qui a un rôle bien moindre, la face b.

On a représenté trois trajets de rayons à titre d'exemple :
- le rayon r2 est tel qu'il ne rencontre pas l'encoche EP, le rayon continue donc son chemin et pourra rencontrer l'encoche suivante
- le rayon r1 rencontre l'encoche, il ressort de la face a car il n'y a pas réflexion totale, puis il rentre à nouveau dans l'encoche par sa face b et poursuit son chemin vers l'encoche suivante. Un choix judicieux de l'angle entre les faces a et b permet de redonner au rayon l'ouverture numérique appropriée.
- le rayon r3 rencontre l'encoche et a une ouverture telle qu'il y a réflexion totale sur la face a : le rayon est redressé et sort de la nappe par la face avant, dans une direction principale substantiellement perpendiculaire au plan de la nappe.

La figure 3 est une variante de la figure 2 : la face a de l'encoche est munie de motifs, par exemple des tores T ici, qui auront pour but, notamment, d'ajuster la répartition horizontale de la lumière émise. La figure 4 est une autre variante où les tores sont disposés cette fois sur la face avant en face des encoches. Le choix de l'une ou de l'autre des variantes dépend, notamment, de considérations de style et/ou de fabrication du moule pour la nappe. Aux deux figures, on a représenté un tracé de rayons qui montre qu'un ensemble de rayons atteignant le tore est étalé de telle manière qu'un observateur peut voir la surface éclairante éclairée de façon homogène quel que soit son angle de vision.

On peut aussi prévoir des stries, qui, elles, permettront d'ajuster la répartition verticale de la lumière émise (sur la face arrière au niveau ou sur la face avant, comme pour les tores).

A noter bien sûr qu'ici la nappe est orientée dans un plan vertical et que les sources lumineuses sont en partie inférieure de la nappe, mais qu'on peut tout aussi bien avoir une nappe dans un autre plan, et avoir les sources plutôt disposées en haut ou sur un côté de la nappe. Dans le cas où les LEDs sont disposées latéralement, et où la nappe est toujours disposée dans un plan substantiellement vertical, il peut être judicieux de disposer les éléments prismatiques verticalement et non plus horizontalement.

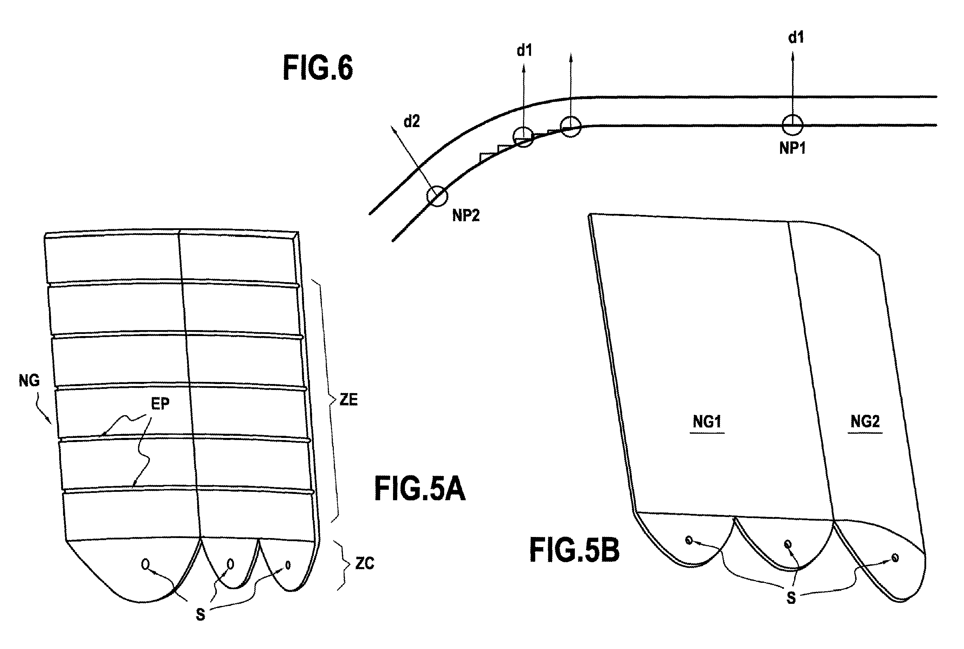

Les figures 5a (vue arrière), 5b (vue de face) représentent un autre exemple selon l'invention, où la nappe n'est plus entièrement plane. Elle se décompose en une portion plane NP1, comme dans l'exemple précédent, et une portion galbée NP2. On doit alors adapter les paramètres de cette portion NP2, de façon à maintenir sur l'ensemble de la nappe une direction d'émission de lumière qui reste constante, notamment perpendiculaire au plan de la nappe dans sa zone plane. La zone de couplage ZC est donc modifiée : elle a le même galbe que la zone d'émission ZE, à savoir une zone que l'on considère sous forme d'une portion de cylindre par approximation. Elle a un pourtour qui n'est plus tout à fait de la forme d'une parabole, mais une forme en 3 dimensions. La zone d'émission ZE est également modifiée, car il est nécessaire d'ajuster les éléments prismatiques afin que les rayons réfléchis par réflexion totale ne partent non pas dans la direction normale à la nappe cette fois, mais dans une direction déviée, afin de la garder identique à celle de la portion plane de la nappe. Pour ce faire, on ajoute des prismes et/ou tores « redresseurs » au niveau des encoches EP.

La figure 6 illustre ce principe en représentant une coupe horizontale de la nappe au niveau de l'encoche EP : dans le cas « NP1 », la nappe est plane, les rayons sortent perpendiculaires au plan de la nappe selon une direction d1. Dans le cas « NP2 », la nappe est galbée, en laissant l'encoche EP sans modification, la lumière repart dans une direction d2, ce qui n'est généralement pas le but voulu. En ajoutant aux encoches, sur leurs faces a, des prismes redresseurs, les rayons sortent à nouveau selon la direction d1. A noter que les rayons sont déviés une première fois au niveau de l'encoche en face arrière EP, puis une seconde en traversant la face avant.

Pour obtenir une bonne homogénéité des faisceaux émis, quel que soit l'angle de vision, on peut combiner la présence de tores et/ou des prismes en face arrière. Les prismes peuvent aussi être disposés en face avant. On peut combiner des prismes redresseurs en face arrière et des tores en face avant (l'inverse étant aussi possible mais moins préféré). Une homogénéité satisfaisante peut être obtenue avec, par exemple, un pas de prismes redresseurs ou de tores d'environ 0. 5 à 3 mm, de préférence d'environ 1 à 2 mm.

Les figures 7, 8 et 9 décrivent trois types de sources lumineuses possibles, et les façons de les associer à la zone de couplage qui leur correspond :
La figure 7 décrit une source S sous forme d'une LED de type « side emitter » décrite et utilisée dans les exemples précédents. Elle est disposée de façon à ce que sa surface émittrice soit dans une ouverture traversante aménagée dans la zone de couplage. Des rayons r émis radialement par la LED sont représentés à la figure : ils partent tous dans l'épaisseur de la zone de couplage. Le cône d'émission C de la LED est également schématiquement représenté.
La figure 8 est une variante : la source S est ici une LED également de type Lambertienne. Ici, il s'agit d'une LED dépourvu de dôme disponible sous le nom commercial de « Golden Dragon ». Elle émet dans un demi-espace. Elle est disposée de façon à ce que sa surface émittrice affleure à la surface de la zone de couplage qui a été aménagée : elle présente localement une zone d'entrée sous forme d'une surface bombée B convexe sur la face du côté duquel se trouve la LED, et , sur la face opposée et en regard de cette face convexe B, une zone s'approchant de la forme d'une forme complémentaire à un cône CO. On peut distinguer deux types de rayons lumineux émis par cette LED : les rayons de type r1 qui entrent directement dans l'épaisseur de la zone de couplage, et les rayons de type r2 qui sont d'abord réfractés par la surface B puis réfléchis totalement par les parois du cône CO. Le cône d'émission C de la LED est également représenté.
La figure 9 est encore une autre variante : on utilise cette fois une LED connue sous la dénomination commerciale « Led Rebel » qui est une LED de type lambertienne à dôme protecteur. La LED est disposée dans la zone de couplage de façon à ce que le dôme soit inséré dans une ouverture non traversante aménagée dans la zone de couplage. On retrouve dans cette ouverture une surface bombée convexe B' et sur la face opposée de la zone de couplage une surface aménagée S pour que, comme à la figure 8, les rayons qui l'atteignent repartent dans la zone de couplage par réflexion totale. On retrouve donc, comme à la figure 8, deux types de rayons émis par la LED : ceux de type r1 émis vers les côtés qui entrent directement dans la zone de couplage, et ceux de type r2 qui sont d'abord réfractés sur la surface B puis réfléchis totalement sur la surface modifiée S située en regard de la surface B.

En conclusion sur le choix des LEDs, on voit que l'invention permet d'utiliser des LEDs de caractéristiques très différentes, pouvant émettre soit radialement, soit dans un demi-plan. Il est nécessaire ensuite d'aménager la zone de couplage en conséquence, par exemple en pratiquant une ouverture traversante ou non pour y insérer tout ou partie de la LED, et en prévoyant des moyens optiques quand cela est nécessaire (notamment pour les LEDs émettant dans un demi plan) pour que le maximum de la lumière émise par la LED se propage bien dans l'épaisseur de la zone de couplage sans déperdition jusqu'à la zone émissive de la nappe de guidage.

## Revendications

1. Dispositif d'éclairage et/ou de signalisation pour véhicule automobile, qui comporte :
- au moins une source lumineuse (S),
- une nappe de guidage (NG) des rayons lumineux qui comporte
- une zone de couplage (ZC) avec la source lumineuse, au sein de laquelle ou à proximité de laquelle est disposée ladite source lumineuse (S),
- une zone d'émission (ZE) de lumière comportant une face arrière (FE) munie d'au moins deux éléments prismatiques (EP) de forme substantiellement longiligne afin que des rayons se propageant dans la nappe et atteignant ces éléments prismatiques sortent de la nappe de guidage par la face (FE) avant, de façon à créer au moins deux surfaces éclairantes également d'une forme substantiellement longiligne correspondant auxdits éléments prismatiques.

2. Dispositif selon la revendication 1, **caractérisé en ce qu'**au moins un des éléments prismatiques (EP) est sous forme d'une encoche courant sur la majorité de la largeur de la nappe.

3. Dispositif selon l'une des revendications précédentes, **caractérisé en ce que** tous les éléments prismatiques (EP) sont de même forme, notamment sous forme d'encoches parallèles entre elles.

4. Dispositif selon l'une des revendications précédentes, **caractérisé en ce qu'**au moins un des éléments prismatiques (EP) est sous forme d'une encoche discontinue.

5. Dispositif selon l'une des revendications précédentes, **caractérisé en ce que** des stries et/ ou tores (T) et/ou prismes sont déposés sur l'une au moins des faces d'au moins un des éléments prismatiques (EP).

6. Dispositif selon l'une des revendications précédentes, **caractérisé en ce que** des stries et/ou tores (T) sont présents sur la face (FE) avant de la nappe de guidage (BG), en regard d'au moins un des éléments prismatiques (EP) de sa face arrière (FR) .

7. Dispositif selon l'une des revendications précédentes, **caractérisé en ce que** la zone de couplage (ZC) de la nappe de guidage (NG) a un chant réfléchissant, notamment par dépôt d'un revêtement réfléchissant du type aluminium et/ou par réflexion totale.

8. Dispositif selon l'une des revendications précédentes, **caractérisé en ce que** la zone d'émission (ZE) de lumière de la nappe de guidage (NG) contient au moins une portion plane.

9. Dispositif selon la revendication précédente, **caractérisé en ce que** la zone de couplage (ZC) correspondante de la nappe de guidage (NG) a une forme substantiellement plane.

10. Dispositif selon la revendication précédente, **caractérisé en ce que** la zone de couplage (ZC) correspondante de la nappe de guidage (NG) a un contour substantiellement parabolique.

11. Dispositif selon l'une des revendications précédentes, **caractérisé en ce que** la zone d'émission (ZE) de lumière de la nappe de guidage (NG) contient au moins une portion galbée, notamment suivant une courbe cylindrique ou conique.

12. Dispositif selon la revendication précédente, **caractérisé en ce que** la zone de couplage (ZC) correspondante de la nappe de guidage (NG) a une forme suivant substantiellement le galbe de la zone d'émission.

13. Dispositif selon l'une des revendications précédentes, **caractérisé en ce que** les éléments prismatiques (EP) et éventuellement les tores (T) et/ou prismes présents dans la zone d'émission de la nappe de guidage (NG) sont disposés de façon à ce que tous les rayons lumineux sortent de la face avant de la nappe de guidage selon un axe optique donné.

14. Dispositif selon l'une des revendications précédentes, **caractérisé en ce que** dans la ou les portions de zones d'émission plane(s) de la nappe de guidage (NG), les rayons sortant de la zone de couplage se propagent selon des plans médians sensiblement perpendiculaires au plan de ladite zone d'émission.

15. Dispositif selon l'une des revendications précédentes, **caractérisé en ce que** dans la ou les portions de zones d'émission (ZE) ayant un galbe sensiblement cylindrique, les rayons sortant de la zone de couplage (ZC) se propagent selon des plans médians qui sont sensiblement perpendiculaires au cylindre et qui contiennent l'axe du cylindre, et **en ce que** dans la ou les portions de zones d'émission (ZE) ayant un galbe sensiblement conique, les rayons sortant de la zone de couplage (ZC) se propagent selon des plans médians qui sont sensiblement perpendiculaires au cône et qui contiennent le sommet du cône.
